# EUROPÄISCHE PATENTANMELDUNG

(11) **EP 2 264 139 A2**
(43) Veröffentlichungstag der Anmeldung: **22.12.2010**
(21) Anmeldenummer: 10004325.6
(22) Anmeldetag: 23.04.2010
(51) Int. Cl.: C12L 9/00, C12L 11/00

(54) **Steigrohr für ein Weinfaß**

(30) Priorität: 12.06.2009 DE 102009024715
(71) Anmelder: Industrie-Technik Kienzler GmbH & Co. KG, 79235 Vogtsburg-Achkarren (DE)
(72) Erfinder: Kienzler, Hubert, 79235 Vogtsburg-Achkarren (DE)
(74) Vertreter: Goy, Wolfgang

(57) **Zusammenfassung**

Ein Steigrohr 3 für ein Weinfaß ist in ein Spundloch 2 dieses Weinfasses 1 abgedichtet hineingesteckt. Die obere Öffnung des Steigrohrs 3 ist durch ein Verschlußelement 8 luft- und flüssigkeitsdicht abgeschlossen. Um entstehende Gärgase auszuleiten, weist das Steigrohr 3 ein Überdruckventil 7 auf.

## Beschreibung

Die Erfindung betrifft ein Steigrohr für ein Weinfaß nach dem Oberbegriff des Anspruchs 1.

Steigrohre für Weinfässer sind bekannt. Sie dienen als Füllstandsanzeige und/oder als Nachfülleinrichtung.

Ein bekanntes Steigrohr für ein Weinfaß sieht einen unteren, rohrföhrmigen Stutzen vor. Mit diesem Stutzen wird das Steigrohr in ein Spundloch eines Weinfasses abgedichtet hineingesteckt. Zur Abdichtung ist der Stutzen von einem Abdichtstopfen umgeben. An den rohrförmgen Stutzen schließt sich oberseitig einstückig ein ebenfalls rohrförmiges Vorratsbehältnis mit größerem Durchmesser an. Die obere Öffnung dieses Vorratsbehältnisses ist luftsowie flüssigkeitsdicht von einer übergestülpten Kappe abgedichtet.

Das so auf das Weinfaß aufgesteckte Steigrohr dient gewissermaßen als Ausgleichsbehälter für das voll mit Wein gefüllte Weinfaß. Dies bedeutet, daß sich der obere Flüssigkeitsspiegel im Bereich des Vorratsbehältnisses dieses Steigrohres befindet. Dadurch kann der Füllstand leicht kontrolliert werden. Wenn durch den natürlichen Schwund des Weines im Holzfaß der Weinspiegel absinkt, kann nach Entfernung des oberseitigen Verschlußelements entsprechend Wein nachgefüllt werden, so daß sich der obere Flüssigkeitsspiegel wieder im Bereich des Vorratsbehältnisses befindet.

Ein Problem bei diesem Steigrohr stellt das nachträgliche Auftreten von Gärgasen dar. Durch diese Gärgase entsteht ein Überdruck sowohl im Faß als auch in dem Steigrohr. Dies führt zwangsläufig zu einem Überlaufen des Fasses und somit zu einem Austritt von Wein.

Davon ausgehend liegt daher der Erfindung die **Aufgabe** zugrunde, das Steigrohr für ein Weinfaß der eingangs angegebenen Art betriebssicherer zu machen.

Die technische **Lösung** ist gekennzeichnet durch die Merkmale des Anspruchs 1.

Die Grundidee der Erfindung besteht darin, das Steigrohr im Bereich des Vorratsbehältnisses mit einem Überdruckventil auszustatten. Dieses Überdruckventil arbeitet dabei als Einwegventil. Treten beispielsweise Gärgase auf, so daß sich ein entsprechender Überdruck aufbaut, können diese Gärgase mittels des Überdruckventils nach außen hin entweichen, was den Überdruck abbaut. Ein Überlaufen des Fasses und somit ein Austritt von Wein kann dadurch verhindert werden. Da dieses Überdruckventil als Einwegventil ausgebildet ist, verhindert es umgekehrt das Eindringen von Umgebungsluft ins Innere des Vorratsbehältnisses. Dadurch entsteht im Steigrohr ein geringes Vakuum, wenn der Weinspiegel aufgrund des natürlichen Schwundes des Weins in einem Holzfaß absinkt.

Vorzugsweise ist gemäß der Weiterbildung in Anspruch 2 das Überdruckventil als Lippenventil ausgebildet. Darunter ist ein im Wesentlichen rohrförmiger Körper aus flexiblen Kunststoff- oder Gummimaterial zu verstehen, welcher sich nach vorne hin lippenartig verjüngt. Die am vorderen Ende ausgebildeten Lippen liegen im Normalzustand aneinander. Sobald von innen her ein Überdruck entsteht, weiten sich die Lippen auf, so daß das Überdruckmedium (Gas oder Flüssigkeit) austreten kann. Umgekehrt schließen sich die Lippen dicht, wenn beispielsweise aufgrund eines Unterdrucks im Innern des Vorratsbehältnisses Umgebungsluft angesaugt wird.

Die Weiterbildung gemäß Anspruch 3 schlägt eine konstruktive Realisierung des Lippenventils vor. Die Grundidee besteht darin, daß im oberen Bereich des Vorratsbehältnisses eine Durchgangsöffnung vorgesehen ist, durch die hindurch von Innen her das Lippenventil eingesetzt wird. Das Lippenventil weist dabei an seinem hinteren Ende einen abdichtenden Ringanschlag auf. Dies stellt insgesamt eine technisch überaus einfache Weise zur technischen Realisierung des Überdruckventils und seiner Montage im Steigrohr dar.

Die Grundidee des Verschlußelements gemäß der Weiterbildung in Anspruch 4 liegt in einem speziellen Stopfen, welcher im unverspannten Zustand problemlos in die obere Öffnung des Vorratsbehältnisses eingesetzt werden kann. Der Stopfen ist dabei aus flexiblem Kunststoff- oder Gummimaterial gebildet. Im nichtverspannten Zustand ist der Durchmesser des Stopfens gleich oder etwas größer oder etwas kleiner als der Innendurchmesser des Vorratsbehältnisses. Dies bedeutet, daß im unverspannten Zustand der Stopfen problemlos in die Öffnung des rohrförmigen Vorratsbehältnisses eingesetzt werden kann. Nachdem er seine Position innerhalb des Vorratsbehältnisses erreicht hat, wird die Flügelmutter gedreht. Die Wirkung ist, daß aufgrund der Quetschung zwischen der Flügelmutter und der Preßplatte der Stopfen in radialer Richtung auseinandergedrückt wird. Er kommt somit mit seiner Umfangsmantelfläche an der Innenwandung des Vorratsbehältnisses dichtend zur Anlage. Wenn das Verschlußelement entfernt werden soll, ist es lediglich erforderlich, die Flügelmutter in die entgegengesetzte Richtung zu drehen. Die Umfangskontur des Stopfens bewegt sich dann wieder radial nach innen, wobei die Preßkraft immer mehr nachläßt. Im völlig entspannten Zustand des Stopfens kann dieser dann aus dem Vorratsbehältnis herausgezogen werden. Der Vorteil dieses Verschlußelements besteht darin, daß er für die erforderliche Dichtigkeit unter Beibehaltung der praktischen Handhabbarkeit sorgt. Der Stopfen kann jederzeit bei Bedarf entfernt werden, ohne daß das Steigrohr entfernt werden müßte oder daß die Gefahr besteht, den im Steigrohr befindlichen Wein zu verlieren.

Vorzugsweise ist gemäß der Weiterbildung in Anspruch 5 der Stopfen in Einführrichtung des Vorratsbehältnisses gesehen konisch ausgebildet. Dies hat den Vorteil, daß der Stopfen problemlos in die obere Öffnung des Vorratsbehältnisses eingeführt werden kann.

Ein Ausführungsbeispiel eines erfindungsgemäßen Steigrohres für ein Weinfaß wird nachfolgend anhand der Zeichnungen beschrieben. In diesen zeigt:
- Fig. 1: das in das Spundloch des Weinfasses eingesteckte Steigrohr mit abgenommenem Verschlußelement;
- Fig. 2: eine Darstellung entsprechend der in Fig. 1, jedoch mit einge- setztem Verschlußelement;
- Fig. 3a: eine Vorderansicht des Lippenventils in geschlossenem Zu- stand;
- Fig. 3b: eine Vorderansicht des Lippenventils in offenem Zustand.

Ein Weinfaß 1 in Form eines Holzfasses weist oberseitig ein Spundloch 2 auf. In dieses Spundloch 2 des Weinfasses 1 ist ein Steigrohr 3 abgedichtet eingesetzt. Zu diesem Zweck weist das Steigrohr 3 im unteren Bereich einen rohrförmigen Stutzen 4 auf. Dieser ist von einem Abdichtstopfen 5 dichtend umgeben. Dieser Abdichtstopfen 5 dichtet dabei somit nicht nur gegenüber dem Stutzen 4 des Steigrohrs 3 ab, sondern auch gegenüber dem Spundloch 2 des Weinfasses 1.

Am oberen Ende des Stutzens 4 des Steigrohrs 3 schließt sich einstückig ein ebenfalls rohrförmiges Vorratsbehältnis 6 mit größerem Innendurchmesser an. Dieses Vorratsbehältnis 6 weist im oberen Bereich ein Überdruckventil 7 in Form eines sogenannten Lippenventils auf. Dieses ist von innen her durch eine entsprechende Öffnung in der Mantelfläche des Vorratsbehältnisses 6 des Steigrohrs 3 hindurchgesteckt.

Die obere Öffnung des Vorratsbehältnisses 6 ist durch ein Verschlußelement 8 verschlossen. Dieses ist durch einen Stopfen 9 aus einem elastischen Gummi- oder Kunststoffmaterial gebildet. Axial durchragt wird der Stopfen 9 von einem Gewindebolzen 10. Dieser weist unterseitig eine Preßplatte 11 sowie oberseitig eine Flügelmutter 12 auf.

Die Funktionsweise ist wie folgt:
Zunächst wird das Steigrohr 3 abgedichtet in das Spundloch 2 des Weinfasses 1 hineingesteckt. Das obere Verschlußelement 8 ist dabei entfernt.

Das Weinfaß 1 kann über das Steigrohr 3 so lange mit Wein 13 befüllt werden, bis sich der obere Flüssigkeitsspiegel im Bereich des Vorratsbehältnisses 6 unterhalb des Überdruckventils 7 befindet. Dadurch ist das Weinfaß 1 bis oben hin mit Wein 13 befüllt.

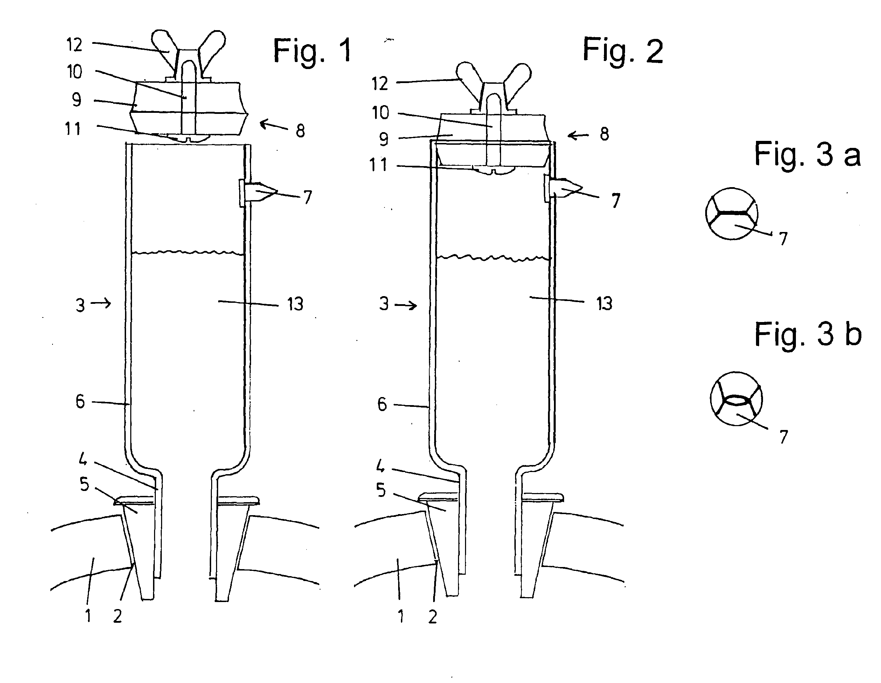

Anschließend kann das Verschlußelement 8 eingesetzt werden (Fig. 2). Der Durchmesser dieses Stopfens 9 ist dabei in etwa gleich oder etwas größer oder etwas kleiner als der Innendurchmesser des Vorratsbehältnisses 6. Durch Anziehen der Flügelmutter 12 wird das elastische Material des Stopfens 9 radial nach außen gepreßt, so daß es in dichtender Anlage zur Innenwandung des Vorratsbehältnisses 6 gelangt. Damit ist der Betriebszustand des Systems erreicht.

Die Höhe des Flüssigkeitsspiegels, nämlich des Weines 13 im Weinfaß 1 kann optisch im Vorratsbehältnis 6 kontrolliert werden, welches zu diesem Zweck entweder durchsichtig oder durchscheinend ist. Sollte der Flüssigkeitsspiegel zu sehr absinken, kann das Verschlußelement 8 gelöst und Wein 13 nachgefüllt werden.

Für den Fall, daß sich Gärungsprozesse abspielen, sammeln sich diese Gärgase im oberen Bereich des Vorratsbehältnisses 6. Für diesen Fall tritt das Überdruckventil 7 in Form des Lippenventils in Aktion, welches als Einwegventil ausgebildet ist. Durch den Überdruck spreizen sich die Lippen des Lippenventils, so daß die Gärgase nach außen hin entweichen können.

Umgekehrt hat jedoch die Umgebungsluft keine Möglichkeit, ins Innere des Vorratsbehältnisses 6 zu gelangen. Denn in diese Richtung sperrt das Lippenventil, insbesondere dann, wenn sich im Innern des Vorratsbehältnisses 6 aufgrund des natürlichen Weinschwundes ein Unterdruck aufgebaut hat.

### Bezugszeichenliste

- 1: Weinfaß
- 2: Spundloch
- 3: Steigrohr
- 4: Stutzen
- 5: Abdichtstopfen
- 6: Vorratsbehältnis
- 7: Überdruckventil
- 8: Verschlußelement
- 9: Stopfen
- 10: Gewindebolzen
- 11: Preßplatte
- 12: Flügelschraube
- 13: Wein

## Patentansprüche

1. Steigrohr (3) für ein Weinfaß (1),
mit einem unteren, rohrförmigen Stutzen (4), mittels welchem das Steigrohr (3) in ein Spundloch (2) des Weinfasses (1) abgedichtet hineinsteckbar ist,
mit einem oberen, an den Stutzen (4) sich anschließendes Vorratsbehältnis (6) sowie mit einem, die obere Öffnung des Vorratsbehältnisses (6) luft- und flüssigkeitsdicht abschließenden Verschlußelement (8),
**dadurch gekennzeichnet,**
**daß** das Vorratsbehältnis (6) im oberen Bereich ein Überdruckventil (7) aufweist, welches Überdruckgase aus dem Innern des Vorratsbehältnisses (6) nach außen passieren läßt und
welches das Eindringen von Umgebungsluft ins Innere des Vorratsbehältnisses (6) sperrt.

2. Steigrohr nach dem vorhergehenden Anspruch,
**dadurch gekennzeichnet,**
**daß** als Überdruckventil (7) ein Lippenventil vorgesehen ist.

3. Steigrohr nach Anspruch 2,
**dadurch gekennzeichnet,**
**daß** die Wand des Vorratsbehältnisses (6) eine Durchbrechung aufweist, durch die hindurch von innen her das Lippenventil abgedichtet hindurchgesteckt ist.

4. Steigrohr nach einem der vorhergehenden Ansprüche,
**dadurch gekennzeichnet,**
**daß** das Verschlußelement (8) durch einen Stopfen (9) aus einem elastischen Material gebildet ist, dessen Außendurchmesser im Wesentlichen dem Innendurchmesser des Vorratsbehältnisses (6) entspricht, und
**daß** axial durch den Stopfen (9) ein Gewindebolzen (10) mit einer Preßplatte am einen Ende und einer aufgedrehten Flügelmutter (12) am anderen Ende derart hindurchragt, daß beim Anziehen der Flügelmutter (12) der Stopfen (9) seinen Durchmesser vergrößert und damit dichtend an der Innenwandung des Vorratsbehältnisses (6) zu liegen kommt.

5. Steigrohr nach dem vorhergehenden Anspruch 4,
**dadurch gekennzeichnet,**
**daß** der Stopfen (9) in Einführrichtung des Vorratsbehältnisses (6) gesehen konisch ausgebildet ist.
